Europäisches Patentamt

**European Patent Office**

Office européen des brevets

(19)

(11) Numéro de publication: **0 051 512
B1**

(12) **FASCICULE DE BREVET EUROPEEN**

(45) Date de publication du fascicule du brevet:
11.07.84

(21) Numéro de dépôt: 81401599.6

(22) Date de dépôt: 14.10.81

(51) Int. Cl.³: **H 01 S 3/08, H 01 S 3/10**

(54) Laser à plusieurs longueurs d'onde utilisant une roue tournante munie d'ouvertures.

(30) Priorité: 23.10.80 FR 8022684

(43) Date de publication de la demande:
12.05.82 Bulletin 82/19

(45) Mention de la délivrance du brevet:
11.07.84 Bulletin 84/28

(84) Etats contractants désignés:
**DE GB**

(56) Documents cités:
**FR - A - 2 245 108
FR - A - 2 339 972
US - A - 3 872 407
US - A - 3 907 430**

**APPLIED PHYSICS LETTERS, volume 27, no. 6, 15
septembre 1975, NEW YORK (US) H. LOTEM et al.
"Double-wavelength laser", pages 344-346
SOVIET JOURNAL OF QUANTUM ELECTRONICS,
volume 8, no. 3, mars 1981 NEW YORK (US) YU. A.
YAKOBI "Spectral tuning of laser emission using
intracavity spatial filtering", pages 337-342**

(73) Titulaire: **COMMISSARIAT A L'ENERGIE ATOMIQUE
Etablissement de Caractère Scientifique Technique et
Industriel, 31/33, rue de la Fédération, F-75015 Paris (FR)**

(72) Inventeur: **Comera, Jean, Venon, F-38610 Gieres (FR)**
Inventeur: **Jaussaud, Claude, 52, rue Jean Jacques
Rousseau, F-38400 Saint Martin D'Heres (FR)**
Inventeur: **Charpentier, Henri, 7, rue Sergent Bobillot,
F-38000 Grenoble (FR)**

(74) Mandataire: **Mongrédien, André et al, c/o
BREVATOME 25, rue de Ponthieu, F-75008 Paris (FR)**

## Description

La présente invention a pour objet un laser à plusieurs longueurs d'onde. Elle trouve une application notamment dans le dosage des polluants de l'atmosphère.

Les demandes de brevet français FR-A No 2245108 du 24 septembre 1973 et FR-A No 2405570 du 4 octobre 1977 ont décrit les conditions particulières qu'il faut remplir pour effectuer une télédétection de polluants atmosphériques. Elles décrivent également, soit au titre de l'art antérieur, soit au titre des inventions qu'elles ont pour objet, différents lasers à plusieurs longueurs d'onde qui remplissent plus ou moins ces conditions.

Le laser décrit dans la seconde demande, en particulier, comprend un milieu amplificateur disposé dans un résonateur formé de deux réflecteurs, dont l'un est du genre de ceux qui renvoient sur lui-même un faisceau de lumière se présentant avec un certain angle d'incidence et une certaine longueur d'onde qui dépend de cet angle. En pratique, il s'agit d'un réseau de diffraction. Intercalée entre ce réseau et le milieu amplificateur se trouve une roue tournante portant un élément optique déflecteur placé périodiquement sur le trajet du faisceau lumineux et défléchisant celui-ci. L'angle d'incidence sur le réseau varie donc périodiquement, ce qui conduit à des longueurs d'onde différentes, qui sont émises séquentiellement. L'élément optique utilisé est en général une portion de lentille.

L'inconvénient d'un tel système est double:
— il est coûteux, car complexe,
— il introduit des pertes optiques dans la cavité.

La présente invention a pour but de remédier à ces inconvénients en proposant un laser qui, tout en étant du genre de celui qui vient d'être décrit, est beaucoup plus simple que celui-ci et évite l'introduction de pertes supplémentaires.

A cette fin, le laser de l'invention utilise un obturateur qui est contitué par une roue tournante placée dans la cavité et qui comprend au moins deux fentes en forme de portions de cercles concentriques, ces fentes définissant autant de trajets différents pour le faisceau lumineux dans le résonateur et donc autant d'angles d'incidence différents sur le réflecteur dispersif. Le premier réflecteur est un miroir sphérique. La cavité résonnante formée par ce miroir et le réseau présente des modes de résonance dont la distribution spatiale est définie par la position des fentes dans la cavité. Les fentes défilant alternativement dans la cavité en des endroits différents, des volumes résonnants différents sont offerts au rayonnement, avec des angles d'incidence différents sur le réseau, ce qui conduit à autant de longueurs d'onde d'émission différentes.

Un exemple de réalisation sera maintenant décrit en référence à des dessins annexés sur lesquels:

la fig. 1 représente un schéma général du laser de l'invention,

la fig. 2 représente une roue tournante utilisable selon l'invention.

Bien que divers systèmes réflecteurs dispersifs puissent être utilisés dans le laser objet de la présente invention, la description qui suit se réfère, à titre purement explicatif, à un réseau de diffraction fonctionnant en réflexion. Mais on pourrait utiliser tout système équivalent comme un prisme associé à un miroir, par exemple.

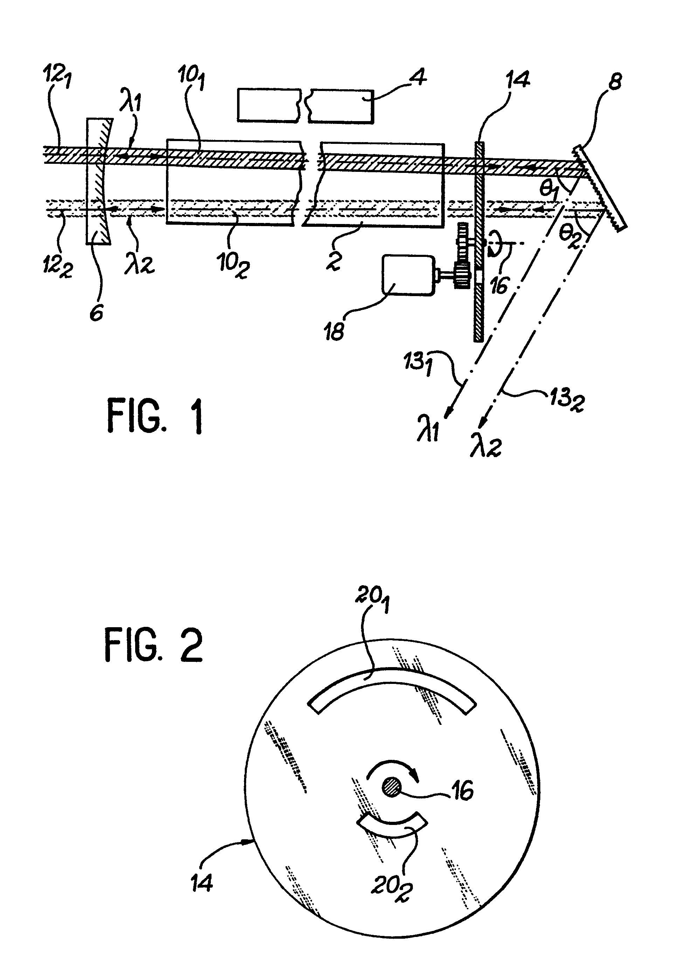

Le laser illustré sur la fig. 1 comprend un milieu amplificateur 2 convenablement excité par des moyens 4 non représentés en détail, un premier réflecteur 6 qui est un miroir sphérique semi-réfléchissant et un second réflecteur dispersif qui est, dans l'exemple illustré, un réseau de diffraction 8 fonctionnant en réflexion. On sait qu'un tel réseau (qui est par exemple du type en échelette) renvoie sur eux-mêmes les rayons lumineux d'angle d'incidence $\vartheta$ et de longueur d'onde $\lambda$, si la relation suivante est satisfaite:

$$2a \sin\vartheta = k\lambda,$$

où a est le pas du réseau, et
k est un nombre entier déterminé par l'ordre utilisé.

A deux angles d'incidence différents $\vartheta_1$ et $\vartheta_2$ correspondent donc deux longueurs d'onde $\lambda_1$ et $\lambda_2$ pour lesquelles les rayons lumineux sont réfléchis sur eux-mêmes.

Pour donner à l'angle d'incidence ces deux valeurs $\vartheta_1$ et $\vartheta_2$, le laser de l'invention utilise une roue tournante 14 montée sur un arbre 16 entraîné en rotation par un moteur 18. Cette roue est représentée de face sur la fig. 2. Elle comprend deux ouvertures $20_1$ et $20_2$ en forme de portions de cercles concentriques.

Le fonctionnement de ce dispositif est le suivant. Chaque ouverture $20_1$, $20_2$ définit un volume résonnant $10_1$, $10_2$ dans le résonateur optique formé par le miroir 6 et le réseau 8. Comme ces ouvertures sont situées en des endroits différents, ces volumes sont différents et, en particulier, sont orientés par rapport à la normale au réseau, de manières différentes. Il en résulte donc deux angles $\vartheta_1$ et $\vartheta_2$ d'incidence et, par conséquent, deux longueurs d'onde d'oscillation différentes.

Le rayonnement de sortie du laser est en général celui qui traverse le miroir 6, lequel est semi-réfléchissant. Sur la fig. 1, on trouve donc deux faisceaux $12_1$ et $12_2$ de longueurs d'onde respectives $\lambda_1$ et $\lambda_2$.

Mais on pourrait aussi utiliser les faisceaux $13_1$ et $13_2$ réfléchis par le réseau de diffraction 8.

Naturellement, la roue 14 peut comprendre plus de deux ouvertures si l'on veut obtenir plus de deux longueurs d'onde d'émission.

On observera que les faisceaux lumineux émis par le laser de l'invention ne sont pas parallèles. En réalité, l'écart angulaire est très faible dans le cas d'un laser à $CO_2$ et de l'ordre de $3 \cdot 10^{-3}$ rd. Cet effet n'est pas gênant, même pour le transport à grande distance du faisceau, car l'utilisation d'un système afocal agrandisseur de faisceau, qui est toujours nécessaire, diminue cet angle d'un facteur au moins égal à 10, et cela d'autant plus que la distance est grande.

On peut, si nécessaire, éliminer totalement cet effet par l'utilisation de divers éléments d'optique et, par exemple, d'un second élément dispersif.

A titre explicatif, les caractéristiques suivantes peuvent être utilisées:
— Miroir M concave, rayon de courbure: 1 m
— Tube amplificateur, longueur: 30 cm; diamètre: 5 mm
— Milieu amplificateur: $CO_2$
— Réseau: 150 traits/mm
— Vitesse de la roue: 50 tr/s
— Puissance de sortie: 1 W crête
— Faisceau: monomode $TEM_{00}$
— Ecart angulaire entre les faisceaux: $3 \cdot 10^{-3}$ rd.

## Revendications

1. Laser à plusieurs longueurs d'onde, comprenant un milieu amplificateur (2) disposé dans un résonateur constitué par un premier réflecteur (6) et un second réflecteur dispersif (8), ce dernier étant du genre de ceux qui renvoient sur lui-même un faisceau de lumière se présentant avec un certain angle d'incidence et une longueur d'onde déterminée dépendant de cet angle, comprenant en outre, intercalée entre ledit milieu amplificateur et ledit second réflecteur dispersif, une roue tournante (14) comprenant au moins deux fentes ($20_1$, $20_2$), caractérisé en ce que ces fentes sont disposées sous forme de portions de différents cercles concentriques et coopèrent avec le premier réflecteur, qui est un miroir sphérique semi-réfléchissant, afin de définir autant de trajets différents ($10_1$, $10_2$) pour le faisceau lumineux dans le résonateur et autant d'angles d'incidence ($\vartheta_1$, $\vartheta_2$) différents sur le réflecteur dispersif.

2. Laser selon la revendication 1, caractérisé en ce que le second réflecteur dispersif est constitué par un réseau de diffraction (8) fonctionnant en réflexion.

## Claims

1. Multiple-wavelength laser, comprising an amplifying medium (2) located in a resonator constituted by a first reflector (6) and a second dispersing reflector (8), said latter being of the type which returns on itself an incident beam of light with a specific angle of inciddence and a wavelength determined by said angle, additionally comprising, interposed between said amplifying medium and said second dispersing reflector a rotatable disc (14) comprising at least two ports ($20_1$, $20_2$), characterized in that said ports have the form of portions of different concentric circles, and cooperate with the first reflector, which is a semi-reflective spherical mirror, whereby to define a corresponding number of different paths ($10_1$, $10_2$) for the light beams in the resonator, and a corresponding number of different angles of incidence ($\vartheta_1$, $\vartheta_2$) on the dispersing reflector.

2. Laser according to claim 1, characterized in that the second dispersing reflector is constituted by a reflective diffraction grating (8).

## Patentansprüche

1. Mehrwellenlaser, mit einem in einem Verstärkermedium (2) angeordneten Resonator, der von einem ersten Reflektor (6) und einem zweiten, zerstreuenden Reflektor (8) gebildet ist, wobei letzterer von der Art derjenigen ist, die ein Lichtbündel auf es selbst zurückwerfen, welches mit einem gewissen Einfallswinkel und einer bestimmten, von diesem Winkel abhängenden Wellenlänge vorliegt, wobei ferner ein sich drehendes, wenigtens zwei Schlitze ($20_1$, $20_2$) aufweisendes Rad (14) zwischen dem Verstärkermedium und dem zweiten, zerstreuenden Reflektor angeordnet vorgesehen ist, dadurch gekennzeichnet, dass diese Schlitze in der Form von unterschiedlichen, konzentrischen Kreisabschnitten angeordnet sind und mit dem ersten Reflektor zusammenarbeiten, welcher ein halbreflektierender, sphärischer Spiegel ist, um ebenso viele unterschiedliche Wege ($10_1$, $10_2$) für das Lichtbündel in dem Resonator und ebenso viele unterschiedliche Einfallswinkel ($\vartheta_1$, $\vartheta_2$) auf dem zerstreuenden Reflektor festzulegen.

2. Laser nach Anspruch 1, dadurch gekennzeichnet, dass der zweite zerstreuende Reflektor von einem Reflexionsstreugitter (8) gebildet ist.

FIG. 1

FIG. 2